# EUROPEAN PATENT APPLICATION

(11) **EP 3 415 434 A1**
(43) Date of publication of application: **19.12.2018**
(21) Application number: 18176979.5
(22) Date of filing: 11.06.2018
(51) Int. Cl.: B64D 15/04, F02C 7/047, B64D 33/02

(54) **NACELLE ANTI-ICING TROUBLESHOOTING FOR A TWO VALVE SYSTEM**

(30) Priority: 12.06.2017 US 201715619986
(71) Applicant: United Technologies Corporation, Farmington, CT 06032 (US)
(72) Inventor: ISLAM, Mainul M., Bolton, CT Connecticut 06043 (US); FEDEWA, Dean, South Windsor, CT Connecticut 06074 (US); ZHENG, Zhijun (David), Avon, CT Connecticut 06001 (US); DIXON, Tommy B., West Palm Beach, FL Florida 33409 (US)
(74) Representative: Schmitt-Nilson Schraud Waibel Wohlfrom Patentanwälte Partnerschaft mbB

(57) **Abstract**

A gas turbine engine anti-icing system troubleshooting method comprising providing an anti-icing system comprising a bleed air source coupled to a pressure regulating valve set having an upper valve coupled end-to-end in series with a lower valve; and an air pressure sensor coupled to the pressure regulating valve set downstream of the pressure regulating valve set; detecting at least one valve fault; checking the upper valve for the at least one valve fault; checking the lower valve for the at least one valve fault; deactivating at least one of the upper valve and the lower valve; and replacing at least one of the upper valve and lower valve.

## Description

The present disclosure is directed to anti-icing systems for use in aircraft. Particularly, the disclosure relates to a method of troubleshooting a nacelle anti ice two valve bleed air system.

Various areas of aircraft structures are subject to ice formation in use and are therefore provided with anti-icing systems. One such area is an engine cowl inlet. The anti-icing system may use bleed air taken from the engine, for example from a compressor stage, to heat the nacelle inlet. The bleed air is typically controlled by a valve which limits the pressure of the air within the inlet so as to avoid damage to the inlet. The air bleed system may also incorporate a shut-off valve for safety purposes.

If one of the two valves fails, determining which of the two valves is difficult under certain fault conditions. If the particular valve failure is not determined, both valves must be replaced instead of locking out the failed valve, causing system in-operability, grounded aircraft and additional costs.

It would be desirable to provide an anti-icing system which has improved detection and availability in the event of a valve failure.

In accordance with the present disclosure, there is provided a gas turbine engine anti-icing system troubleshooting method comprising providing an anti-icing system comprising a bleed air source coupled to a pressure regulating valve set having an upper valve coupled end-to-end in series with a lower valve; and an air pressure sensor coupled to the pressure regulating valve set downstream of the pressure regulating valve set; detecting at least one valve fault; checking the upper valve for the at least one valve fault; checking the lower valve for the at least one valve fault; deactivating at least one of the upper valve and the lower valve; and replacing at least one of the upper valve and lower valve.

Particular embodiments may include any of the following optional features, alone or in combination:
In addition to the above, or as an alternative, the step of detecting at least one valve fault may comprise detecting at least one of a regulating low, a regulating high, a failing open (i.e., failing off) and a failing closed for at least one of the upper valve and the lower valve.

In addition to the above, or as an alternative, the step of checking the upper valve for the at least one valve fault further may comprise deactivating the lower valve; starting the gas turbine engine; and determining an upper valve fault message.

In addition to the above, or as an alternative, the step of checking the lower valve for the at least one valve fault further may comprise deactivating the upper valve; restarting the gas turbine engine; and determining a lower valve fault message.

In addition to the above, or as an alternative, the step of deactivating at least one of the upper valve and the lower valve further may comprise at least one of locking open the upper valve and locking open the lower valve.

In addition to the above, or as an alternative, the method further may comprise sending dispatch message to set up a maintenance action to replace at least one of the upper valve and the lower valve.

In addition to the above, or as an alternative, the method further may comprise replacing at least one of the upper valve and the lower valve.

In addition to the above, or as an alternative, the air pressure sensor may be a single air pressure sensor.

Other details of the nacelle anti-ice troubleshooting method are set forth in the following detailed description and the accompanying drawing wherein like reference numerals depict like elements.
Figure 1 is a schematic of a turbine engine showing a two valve nacelle anti-icing system.
Figure 2 is a schematic of the two valves of the nacelle anti-icing system of Figure 1.
Figure 3 is a process flow diagram of a method for troubleshooting a two valve nacelle anti-ice system.

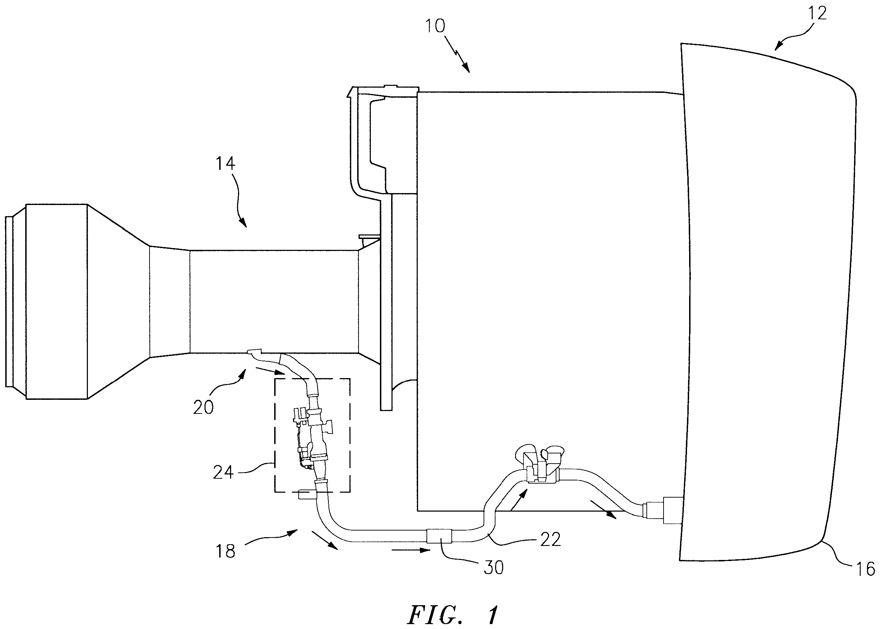

Referring now to figure 1, there is illustrated a gas turbine engine 10. The gas turbine engine 10 for an aircraft comprises a nacelle 12 surrounding the engine 10. The gas turbine engine 10 comprises, in serial flow arrangement a fan, a low pressure compressor, a high pressure compressor, a combustor, a high pressure turbine and a low pressure turbine (not shown). The compressors, the combustor and the turbines are housed within a core casing 14 which is coupled to the nacelle 12 by suitable structure such as struts or vanes.

In operation, a nacelle inlet 16 of the nacelle 12 may be prone to icing. This is potentially dangerous, if ice forms on the nacelle inlet 16 and detaches from the nacelle inlet 16. The detached ice may be ingested into the gas turbine engine 10 and cause damage.

The nacelle inlet 16 is provided with an anti-icing system 18. The anti-icing system 18 includes a bleed air source 20 from the compressor, for example bleed air taken from the high pressure compressor. The air at the bleed point will be relatively hot (for example about 250° C.) and may therefore be used for anti-icing purposes. The location of the bleed air source 20 can be chosen to provide a suitable air temperature depending on the gas turbine engine 10.

The bleed air is supplied to the nacelle inlet 16 through a bleed air supply line 22. The anti-icing system 18 also comprises a bleed air pressure regulation valve set 24 coupled end-to-end in the bleed air supply line 22. The bleed air pressure regulation valve set 24 can be arranged within the nacelle 12, or can be formed at any other position in the fluid path between the bleed air source 20 and the nacelle inlet 16.

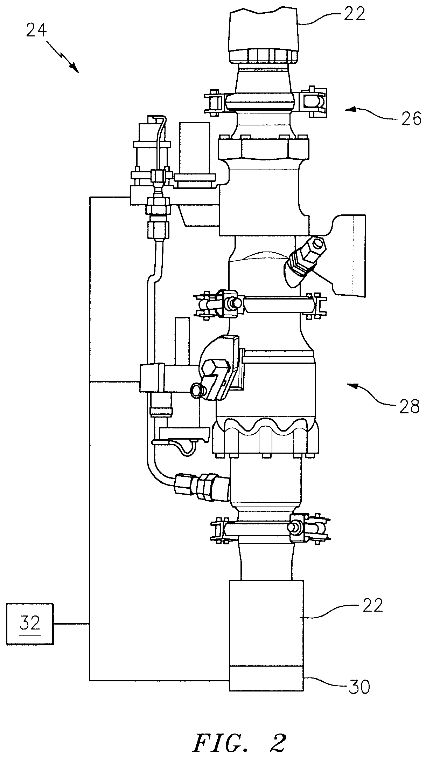

Referring to figure 2, the bleed air pressure regulation valve set 24 includes pressure regulating valves including an upper valve 26 and a lower valve 28 coupled end-to-end with the upper valve 26. The end-to-end valve arrangement can be directly adjacent to each other and up to 6 valve diameters apart. The upper valve 26 and lower valve 28 are not identical valves. In an exemplary embodiment the upper valve 26 is configured with a different valve actuation reaction time than the lower valve 28. Having varying valve actuation reaction times between the valves 26, 28 ensures proper instrumentation and controls logic and function with the bleed air pressure regulation valve set 24.

The bleed air pressure regulation valve set 24 is coupled to an air pressure sensor 30 located downstream of the bleed air pressure regulation valve set 24 in the bleed air supply line 22. In an exemplary embodiment a single air pressure sensor 30 is utilized to sense the pressure of the bleed air used in the anti-icing system 18. The air pressure sensor 30 is coupled to the instrumentation and controls system 32 (EEC of the gas turbine engine 10). The air pressure sensor 30 communicates with the instrumentation and controls system and the bleed air pressure regulation valve set 24 in order to enable proper function of the anti-icing system 18. The air pressure sensor 30 can be coupled pneumatically and/or electronically to the bleed air pressure regulation valve set 24.

In an exemplary embodiment, the control logic is used to determine failures of the valves 26, 28 using valve actuation reaction times and pressure measured by air pressure sensor 30. The actuation of the valves 26, 28 is independently controlled by the control logic. The actuation and reaction time of the upper valve 26 is independent of the lower valve 28. This independence allows the control logic to determine the status of the valves 26, 28, (i.e., valve regulation, faults, valve open, valve closed) and the overall anti-ice system 18 status to assist in troubleshooting. The control logic can send various status messages to the aircraft cockpit for action and/or to be stored in the aircraft maintenance system. The control logic also uses the actuation timing of the valves 26, 28 and feedback from the air pressure sensor 30 to determine the number of valves that it needs to operate during normal operation and faulted conditions of the anti-ice system 18.

In an exemplary embodiment, the anti-icing system 18 may have just two pressure regulating valves 26, 28 end-to-end in series, but in an alternative embodiment, the anti-icing system 18 may comprise any number of pressure regulating valves arranged in series. In such a system, however, the control pressure feed from the air pressure sensor 30 for each pressure regulating valve should be taken from downstream of the last, most downstream, pressure regulating valve.

The failure to properly operate, (i.e., regulating low, regulating high, failed open, failed closed) of any one of the pressure regulating valves 26, 28 of the bleed air pressure regulation valve set 24, due to a fault mechanism (actuator failure, decoupled I&C lines, valve mechanism binding, air leaks, short circuit and the like), can cause gas turbine engine 10 problems, such as fan degradation, due to the failure of the anti-icing system 18 to properly operate.

In operation the anti-icing system 18 receives instrumentation and control signals to actuate the pressure regulation valve set 24. The pressure regulating valves 26, 28 actuate to allow the bleed air source 20 to supply bleed air to the nacelle 12. The air pressure sensor 30 provides air pressure signals to the instrumentation and controls 32 to then actuate the pressure regulating valves 26, 28. If a pressure regulating valve 26, 28 fails, i.e., has a fault, the fault will be detected by the instrumentation and controls system 32. A fault detection signal and or indication will be provided, (such as in the cockpit) for engine operators to take action.

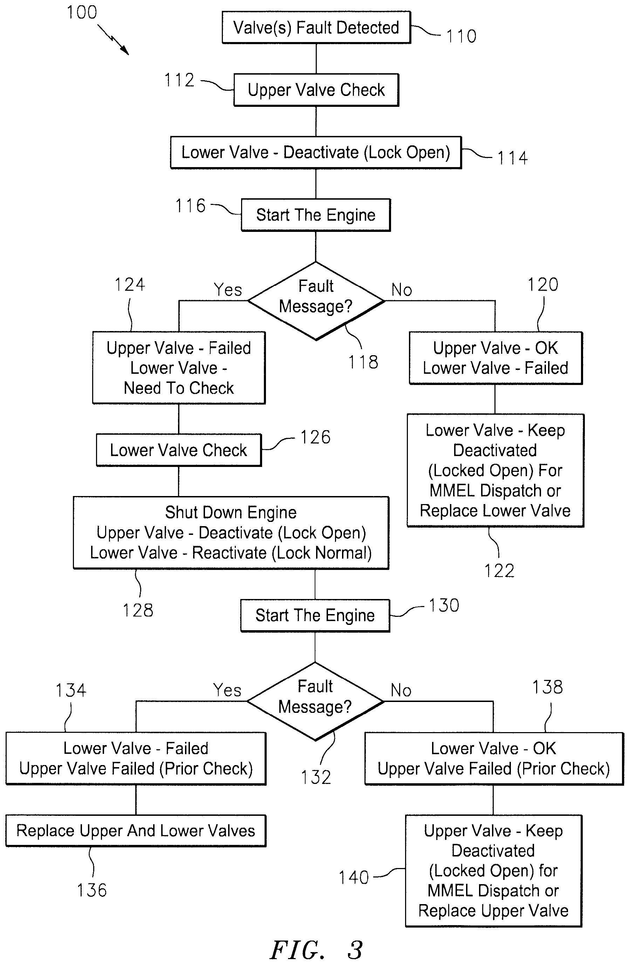

Referring now to figure 3, an exemplary troubleshooting method 100 is shown. The method is initiated upon detecting a valve fault 110, for either of the upper valve 26, the lower valve 28 or both valves 26, 28. The next step 112 is checking the upper valve 26. That step 112 can include inspection of the upper valve 26 mechanical elements, actuator, control lines and the like. The next step 114 in the method 100 is deactivating the lower valve 28, i.e., locking the valve in the open position. The gas turbine engine is started and/or run at step 116. The instrumentation and controls system 32 will then indicate an upper valve fault message or not indicate an upper valve fault message at decision node 118.

If there is no fault indicated, then the upper valve 26 can be considered operational and a determination that the lower valve has failed can be made at step 120. The next step 122 is deactivating the lower valve 28. A dispatch message can be sent to set up a maintenance action to replace the lower valve 28, or simply replace the lower valve 28 at step 122.

At step 124, if a fault is indicated, it is determined that the upper valve 26 has failed, and the next step 126 is checking the lower valve 28. At step 128 the engine is shut down, the upper valve 26 is deactivated and the lower valve 28 is reactivated, i.e., (lock normal). The engine is then started/run at step 130. The instrumentation and controls system 32 will then indicate a lower valve fault message or not indicate a lower valve fault message at decision node 132.

If the fault message is indicated, then at step 134, it is determined that the lower valve 28 has failed, i.e., it is regulating low or regulating high, and the upper valve 26 has failed (based on step 124). At step 136, the upper valve 26 and lower valve 28 are replaced.

If the fault message is not indicated at node 132, then at step 138, it is determined that the lower valve 28 functions properly (OK, regulating normal) and that the upper valve 26 has failed (based on step 124). The next step 140 is deactivating the upper valve 26. The valve 26 is locked open. A dispatch message can be sent to set up a maintenance action to replace the upper valve 26, or alternatively the upper valve 26 can be replaced at step 140.

The anti-icing system 18 and troubleshooting method described herein provides a technique to effectively isolate system component failures utilizing only a single pressure sensor which minimizes the number of system components and maximizes reliability.

The anti-icing system 18 and troubleshooting method described herein provides a system architecture of fault logic, control software, and a pressure sensor to determine failures (regulating, failed/open/closed) of independent pressure regulating valves in series. The disclosed system architecture allows for reduced fault detection time and isolation of failures of the valves in series.

There has been provided an anti-ice troubleshooting method. While the anti-ice troubleshooting method has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A gas turbine engine anti-icing system troubleshooting method comprising:
providing an anti-icing system comprising:
a bleed air source coupled to a pressure regulating valve set having an upper valve coupled end-to-end in series with a lower valve; and
an air pressure sensor coupled to said pressure regulating valve set downstream of said pressure regulating valve set;
detecting at least one valve fault;
checking said upper valve for said at least one valve fault;
checking said lower valve for said at least one valve fault; and
deactivating at least one of said upper valve and said lower valve.

2. The method according to claim 1, wherein said detecting at least one valve fault comprises:
detecting at least one of a regulating low, a regulating high, a failing open and a failing closed for at least one of said upper valve and said lower valve.

3. The method according to claim 1 or 2, wherein said checking said upper valve for said at least one valve fault further comprises:
deactivating said lower valve;
starting said gas turbine engine; and
determining an upper valve fault message.

4. The method according to any of claims 1 to 3, wherein checking said lower valve for said at least one valve fault further comprises:
deactivating said upper valve;
restarting said gas turbine engine; and
determining a lower valve fault message.

5. The method according to any of claims 1 to 4, wherein deactivating at least one of said upper valve and said lower valve further comprises at least one of locking open said upper valve and locking open said lower valve.

6. The method according to any of claims 1 to 5, further comprising:
sending a dispatch message to set up a maintenance action to replace at least one of said upper valve and said lower valve.

7. The method according to claim 6, further comprising:
replacing at least one of said upper valve and said lower valve.

8. The method according to any of claims 1 to 7, wherein said air pressure sensor is a single air pressure sensor.
